(19)

**Europäisches Patentamt**
**European Patent Office**
**Office européen des brevets**

(11) **EP 2 319 170 B1**

(12) **EUROPEAN PATENT SPECIFICATION**

(45) Date of publication and mention
of the grant of the patent:
**31.10.2012 Bulletin 2012/44**

(21) Application number: **08787493.9**

(22) Date of filing: **26.08.2008**

(51) Int Cl.:
*H02M 7/797* (2006.01)   *H02P 9/02* (2006.01)
*H02P 9/10* (2006.01)   *H02P 21/00* (2006.01)
*G01R 31/3183* (2006.01)

(86) International application number:
**PCT/EP2008/061147**

(87) International publication number:
**WO 2010/022766 (04.03.2010 Gazette 2010/09)**

(54) **CONTROL OF A VOLTAGE SOURCE CONVERTER USING SYNCHRONOUS MACHINE EMULATION**

STEUERUNG EINES SPANNUNGSZWISCHENKREISUMRICHTERS UNTER VERWENDUNG EINER SYNCHRONMASCHINENEMULATION

COMMANDE D' UN CONVERTISSEUR DE CIRCUIT DE TENSION INTERMEDIAIRE À L AIDE D' UNE ÉMULATION DE MACHINE SYNCHRONE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**11.05.2011 Bulletin 2011/19**

(73) Proprietor: **ABB Technology AG**
**8050 Zürich (CH)**

(72) Inventor: **HARNEFORS, Lennart**
**S-632 26 Eskilstuna (SE)**

(74) Representative: **Ahrengart, Kenneth**
**ABB AB**
**Intellectual Property**
**Ingenjör Bååths Gata 11, T2 Floor E**
**721 83 Västerås (SE)**

(56) References cited:
**EP-A- 1 909 371**   **DE-A1-102006 047 792**
**US-A1- 2005 198 606**   **US-A1- 2006 268 587**
**US-A1- 2007 108 771**

EP 2 319 170 B1

**Description**

<u>FIELD OF INVENTION</u>

The present invention generally relates to voltage source converters. The present invention is more particularly directed towards a method, device and computer program product for controlling a voltage source converter connected to a power grid.

<u>BACKGROUND</u>

The number of voltage source converters (VSCs) that are connected to the average utility grid is steadily increasing. Applications include high-voltage direct current (HVDC) transmissions, static synchronous compensators (STATCOMs), back-to-back motor drives, distributed generation and wind-turbine generators.

In some cases, particularly when the rated power capacity is high, i.e. in the MVA range, it may be desirable for the voltage source converter to contribute to the voltage control of the grid. The voltage source converter should thus control the grid-voltage magnitude at the bus to which it is connected. This is particularly true for VSC-HVDC terminals and the fundamental purpose of a STATCOM.

Standard control of grid-connected voltage source converters is derived from control of inverter-fed AC drives. A phase locked loop (PLL) is used to synchronize the voltage source converter to the grid voltage, which is equivalent to rotor-position measurement or estimation in an AC drive. The output angle of the PLL is the reference angle of the synchronously rotating dq frame, in which the current control loop for the converter current operates. This loop typically has a high bandwidth: 100 rad/s or above. The output of the current control is the reference voltage vector for a pulse width modulator (PWM). In cascade with the current control loop outer loops are added, operating at lower bandwidths, primarily for the DC-link voltage control, active-power control and grid-voltage magnitude control.

A voltage source converter that employs this type of control system must always have a reasonably stiff grid voltage on which to synchronize, i.e. the grid must be reasonably strong. In addition the system cannot be used in situations when the voltage source converter is to control the frequency of the grid. This is the case in for instance supply of passive grids, wind farms connected to the main grid by a VSC-HVDC transmission and when a VSC-HVDC transmission is employed to restart part of a grid after a blackout (called a "black start").

One example of the use of PLL in relation to voltage source converters for use in "black starts" is given in WO 2008/000626.

There is therefore a need for improvement in the control of a voltage source converter connected to a utility grid.

In relation to this US 2006/0268587 describes the control of an inverter, the frequency of which is controlled using a mapping of the mass mechanical dynamics of a synchronous machine onto a model of the inverter. However, the inverter does not contribute to the voltage control of the grid.

DE 102006047792 describes a device that has a mains voltage measuring unit attached to a three-phase power grid. A computer unit is connected to a three-phase measuring unit and is provided for determining conditioning current values. An inverter is connected with the power grid and is provided for supplying conditioning currents based on the determined values. The computer unit is designed for a modeled reproduction of a synchronous machine to provide a portion of the current values as stator currents of the reproduced synchronous machine and mains voltages of the power grid as inputs.

There is therefore a need for improvement in relation to control of a voltage source converter connected to a utility grid where the voltage source converter is able to contribute to the control of this grid.

<u>SUMMARY OF THE INVENTION</u>

The present invention is generally directed towards providing improved control of a voltage source converter connected to a power grid.

According to the principles of the present invention a voltage source converter that is connected to a power grid is controlled using an emulation of the electrical dynamics of a non-salient synchronous machine.

One object of the present invention is to provide an improved method for controlling a voltage source converter connected to a power grid.

This object is the solved through a method according to claim 1 for controlling a voltage source converter connected to a power grid and comprising the steps of:

- detecting at least one electrical property of an interface between the grid and the voltage source converter, and
- controlling the voltage source converter through using a control signal obtained through a mapping of an electrical model of a non-salient synchronous machine onto an electrical model of the voltage source converter, through

2

applying the detected electrical property of the interface between the grid and the voltage source converter in the mapped model, where the electrical model of the non-salient synchronous machine reflects the electrical dynamics of this synchronous machine and through applying an emulation of the mass mechanical dynamics of the non-salient synchronous machine for adjusting the control signal, wherein the applying of an emulation of the mass mechanical dynamics comprises low-pass filtering a mass dynamics expression, which mass dynamics expression includes a reference line frequency plus a term that acts as a proportional controller for the active electrical power in order for obtaining an angular line frequency of the voltage source converter.

Another object of the present invention is to provide a device for controlling a voltage source converter connected to a power grid, where the control of the voltage source converter is improved.

This object is solved through a device according to claim 12 for controlling a voltage source converter connected to a power grid and comprising:

- a first input for receiving at least one detected electrical property of an interface between the grid and the voltage source converter, and
- a control entity arranged to control the voltage source converter through using a control signal obtained through a mapping of an electrical model of a non-salient synchronous machine onto an electrical model of the voltage source converter and through applying the detected electrical property of the interface between the grid and the voltage source converter in the mapped model, where the electrical model of the non-salient synchronous machine reflects the electrical dynamics of this synchronous machine,
- wherein the control entity when being arranged to control the voltage source converter is further arranged to apply an emulation of the mass mechanical dynamics of the non-salient synchronous machine for adjusting the control signal, where the applying of an emulation of the mass mechanical dynamic comprises low-pass filtering a mass dynamics expression, which mass dynamics expression includes a reference line frequency plus a term that acts as a proportional controller for the active electrical power in order for obtaining an angular line frequency of the voltage source converters.

Another object of the present invention is to provide a computer program product on a data carrier for controlling a voltage source converter connected to a power grid, which improves the control of the voltage source converter.

This object is solved through a computer program product provided on a data carrier for controlling a voltage source converter connected to a power grid, and comprising computer program code to make a control device perform the method according to the first aspect when the code is loaded into the control device.

The present invention has a number of advantages. The control contributes to the control of the grid. A reduction of the grid voltage magnitude can be counteracted by an injection of reactive power from the voltage source converter. It furthermore provides stability regardless of the grid characteristics. This is important since it is often necessary to maintain stability of the grid regardless of the grid strength and regardless of the dynamics of the load, machines and other converters connected to the grid. The inventive concept can also be applied for passive grids. Voltage source converter control using an emulation of the electrical dynamics of a non-salient synchronous machine is furthermore promising regarding use in relation to weak or passive grids, including wind-farm applications. Tuning of a control device may then become much more straight-forward and robust as compared with conventional control devices, since it may be possible to consider experience in dynamics and control of synchronous machines.

BRIEF DESCRIPTION OF THE DRAWINGS

The present invention will in the following be described with reference being made to the accompanying drawings, where

fig. 1 schematically shows two control devices in a power transmission system each being arranged to control a corresponding voltage source converter,
fig. 2 shows a flow chart of a number of general method steps being performed in a method for controlling a voltage source converter according to the present invention,
fig. 3a schematically shows an electrical model of a non-salient synchronous machine,
fig. 3b schematically shows an electrical model of a voltage source converter,
fig. 4 shows a block schematic of a number of units in a control device according to a preferred embodiment of the present invention for controlling a voltage source converter,
fig. 5 shows a number of method steps being performed in the control device of the preferred embodiment of the present invention for controlling the voltage source converter according to a mapping of the electrical model of the non-salient synchronous machine onto the electrical model of the voltage source converter, and

fig. 6 shows a number of method steps being performed in the control device of the preferred embodiment of the present invention for controlling the voltage source converter through applying an emulation of the mass mechanical dynamics of the non-salient synchronous machine.

## DETAILED DESCRIPTION OF THE INVENTION

In the following, a detailed description of preferred embodiments of a device and a method according to the present invention will be given.

The present invention may be provided in a system, which is to be connected to a power or utility grid via voltage source converters (VSCs). Such systems include systems for generation and transmission of electrical DC or AC power, i.e. high-voltage or ultra high-voltage power transmission and generation systems.

When a voltage source converter is connected to a utility or power grid, it may be desirable to let the converter contribute to the control of the grid. The present invention is directed towards enabling such contributions to be made by a voltage source converter.

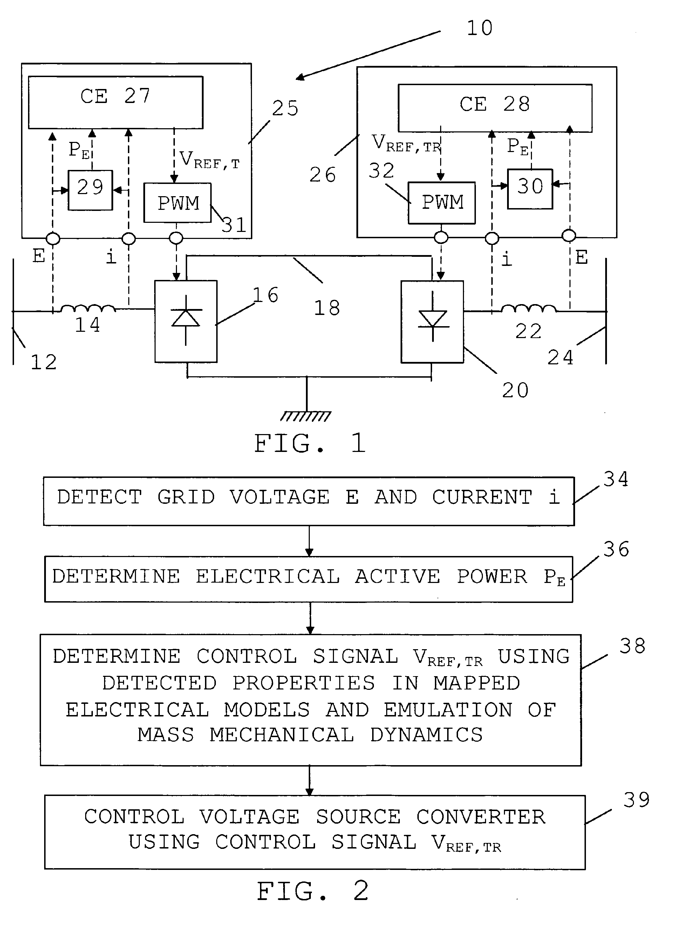

In fig. 1 there is schematically shown a single line diagram of an exemplifying power transmission system in the form of a High Voltage Direct Current (HVDC) system, i.e. a high-voltage (above 50 kV) or ultra high-voltage (above 400 kV) power transmission system. It should be realized that the present invention is not limited to such a system, but may be used in other types of high-voltage or ultra high-voltage power transmission systems, such as for instance Flexible Alternating Current Transmission System (FACTS) as well as in other types of applications such as in static synchronous compensators (STATCOMs), back-to-back motor drives, distributed generation and wind-turbine generators.

In fig. 1 there is a first power grid 12, which is normally a three-phase power grid, which leads to a first inductance 14. The first inductance 14 is connected to a first voltage source converter 16, which converts the AC power to DC power, i.e. acts as a rectifier. The first inductance 14 is often realized through the use of a transformer and acts as an output filter of the first voltage source converter 14. The first voltage source converter 16 is in turn connected to a first DC power line 18, which in turn leads to a second voltage source converter 20, which is a converter converting DC power to AC power, i.e. acts as an inverter. The second voltage source converter 20 is in turn connected to a second inductance 22, also often realized through a transformer. The second inductance 22 is also often realized through the use of a transformer and acts as an output filter of the second voltage source converter 20. The second inductance 22 is furthermore connected to a second power grid 24, which is also here normally a three-phase power grid. The first and second voltage source converters 16 and 20 are furthermore connected to ground. The system shown in fig. 1 is a so-called monopole system, where the first DC power line 18 is provided at a positive voltage. This means that there is a forward current path provided by the first DC power line 18 and a return current path provided via ground. In the system in fig. 1, the DC power line 18 may form a DC link of at least several kilometers length in order to be used to transmit power at reduced losses over a considerable distance. However, it is also possible to use the same configuration to interconnect two AC power grids with for example different AC frequencies at one and the same location.

It should be realized that the system may as an alternative be a so-called bipole system, where each voltage source converter would be connected, at the ground connection, to a corresponding third and fourth voltage source converter, which are in turn connected to a second DC power line covering the same distance as the first DC power line. The third voltage source converter would here be of the same type as the first voltage source converter 16, while the fourth voltage source converter would be of the same type as the second voltage source converter 20. Here there would be a forward current path provided by the first DC power line 18 and a return current path provided by the second DC power line.

Fig. 1 furthermore shows two control devices 25 and 26, where a first control device 25 is provided for controlling the first voltage source converter 16 and a second control device 26 is provided for controlling the second voltage source converter 20.

The first control device 25 has two inputs on which it receives measurement values that are associated with electrical properties of the interface between the first grid 12 and the first voltage source converter 16. The electrical properties of the interface between the first grid and the first voltage source converter are here the current i between the first converter 16 and the first grid 12, which may be running either to or from the grid 12, and the voltage E of the first grid 12 in the proximity of the first voltage source converter 16. These measurements are furthermore provided to a first control entity 27 in the control device 25. The supply of the measurement values is in fig. 1 indicated with dashed lines. These measurements are furthermore also provided to a power determining unit 29, which in a known way determines the electrical active output power $P_E$ of the first voltage source converter 16 based on the grid voltage E and the current i. Also this active output power $P_E$ is submitted to the control entity 27 from the power determining unit 29, which is indicated through a dashed line. The first control entity 27 also provides a control signal in the form of a control voltage $V_{REF,TR}$, which is provided to a Pulse Width Modulation (PWM) circuit 31 also provided in the first control device 25. Also the control signal $V_{PEF,TR}$ is indicated with a dashed line. The control signal $V_{REF,TR}$ is here used in know fashion by the first PWM circuit 31 for controlling the first voltage source converter 16 via an output of the control device 25. Also this PWM control is indicated with a dashed line.

The second control device 26 is similarly provided with two inputs on which it receives measurement values that are associated with the electrical properties of the interface between the second grid 24 and the second voltage source converter 20. The electrical properties of the interface between the second grid and the second voltage source converter are here the current i between the second converter 20 and the second grid 24, which may be running either to or from the grid 24 and the voltage E of the second grid 24 in the proximity of the second converter 20. These measurement values (also indicated with dashed lines) are here provided to a second control entity 28 in the second control device 26. Also here there is provided a power determining unit 30, which determines the electrical active output power $P_E$ of the second voltage source converter 20 based on the grid voltage E and the current i. Also this active output power $P_E$ is submitted to the control entity 28, which is indicated with a dashed line. The second control entity 28 also provides a control signal in the form of a control voltage $V_{REF;TR}$, which is provided to a second Pulse Width Modulation (PWM) circuit 32 also provided in the second control device 26. The control signal $V_{REF,TR}$, shown as a dashed line, is here used in know fashion by the second PWM circuit 32 for controlling, also indicated with a dashed line, the second voltage source converter 20 via an output of the second control device 26.

In fig. 1 the measurement values obtained by the two control devices have been denoted with the same symbols. This has been done in order to indicate that the control being performed according to the principles of the present invention can be made for both types of converters. For the same reason the control signals have also been denoted with the same symbols.

The general functioning of the second control device 26 will now be described with reference being made to fig. 2, which shows a flow chart of a number of general method steps being performed by the second control device 26 in a method for controlling the second voltage source converter according to the present invention.

The control device 26 first detects the grid voltage E and current i, i.e. electrical properties associated with the interface between the second grid 24 and the second voltage source converter 20, step 34. This current i is here furthermore denoted a converter current. The detection is done through these properties being detected using standard detecting units for instance involving current and voltage transformers and supplying these measurement values, possibly after A/D conversion, to the control entity 28. Also the power determining unit 30 receives these measurement values and determines the electrical active output power $P_E$, step 36. When the electrical active output power $P_E$ has been determined a calculated value of this is also provided to the control entity 28. The control entity 28 then determines a control signal $V_{REF,TR}$ that is to be used based on these detected properties, step 38, and then supplies the control signal $V_{PEF,TF}$, possibly after D/A conversion, to the PWM circuit 32, which then applies this control signal in a known fashion for controlling the second voltage source converter 20, step 39.

In the determination of this control signal, the control entity 28 emulates the electrical dynamics of a non-salient synchronous machine. It does this through using a mapping of an electrical model of a non-salient synchronous machine onto an electrical model of the second voltage source converter and through applying the detected electrical properties, here the converter current i and the grid voltage E of the interface between the grid and the voltage source converter 20 in this mapped model. Here the electrical model of the non-salient synchronous machine reflects the electrical dynamics of such a synchronous machine. The control entity 28 here furthermore applies an emulation of the mass mechanical dynamics of the non-salient synchronous machine for adjusting the control signal. Here the active output power $P_E$ is used when applying this emulation in the control. Through the emulation of the mass mechanical dynamics an angle may be obtained that is used for adjusting the previously determined control signal.

How the control may be performed in more detail will now be described.

In the synchronous dq reference frame, the electrical dynamics of a non-salient synchronous machine are given by:

$$L_\sigma * d\mathbf{i}_s/dt = \mathbf{e}_M - \mathbf{v}_s - (R_R + j\omega_1 L_\sigma)\mathbf{i}_s + (R_R - j\omega_1 L_M)\mathbf{i}_M \quad (1)$$

$$D\mathbf{i}_M/dt = (R_R/L_M) * (\mathbf{i}_s - \mathbf{i}_M) \quad (2)$$

where $\mathbf{i}_s$ is a stator current vector, $\mathbf{e}_M$ a back emf (electromotive force) vector, i.e. a magnetizing voltage, $\mathbf{v}_s$ a stator voltage vector, $\mathbf{i}_M$ a magnetizing current vector, $L_\sigma$ the total (stator and rotor) leakage inductance, $L_M$ the magnetizing

inductance and $\omega_1$ the angular line frequency.

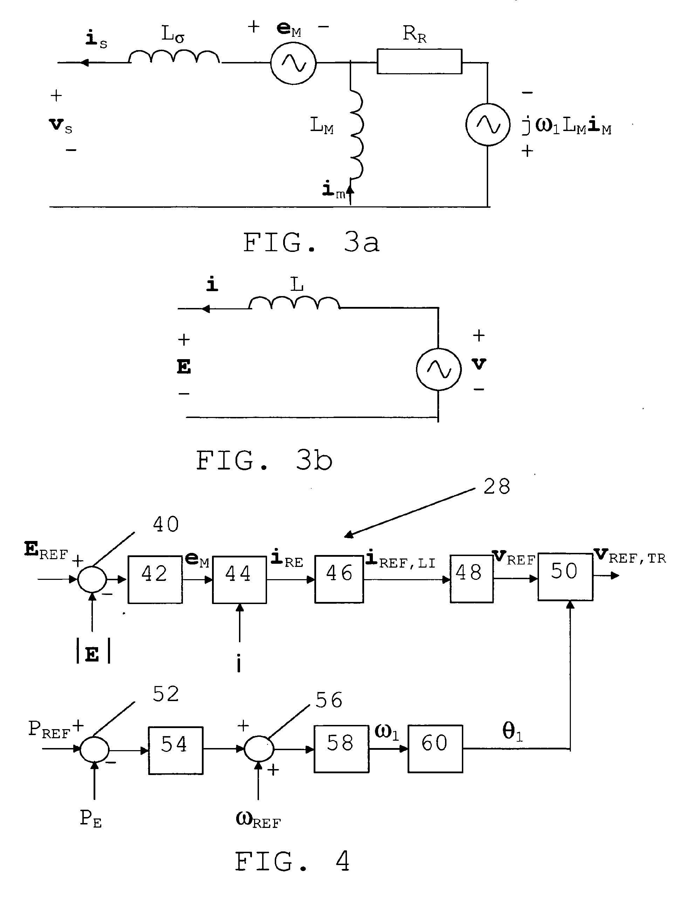

An equivalent electric circuit corresponding to equation (1) above is shown in fig. 3a, which shows from right to left a rotor branch including a current dependent voltage source $j\omega_1 L_M i_M$ and the rotor resistance $R_R$. This rotor branch is in turn connected in parallel with a magnetizing branch including the magnetizing inductance $L_M$ through which the magnetizing current $\mathbf{i}_M$ is running. A voltage source providing the back emf $\mathbf{e}_M$ is at one end connected to a first connection point interconnecting the parallel magnetizing and rotor branches and at another end connected to a first end of the total leakage inductance $L_\sigma$, through which the stator current $\mathbf{i}_s$ is running. The stator voltage $\mathbf{v}_s$ is finally provided between a second end of the magnetizing inductance $L_M$ and a second connection point interconnecting the parallel magnetizing and rotor branches.

In case the voltage source converter is provided with a pure inductive filter facing the grid, as is shown in fig. 1, and having inductance L, the dynamics of the converter current are given by:

$$Ld\mathbf{i}/dt = \mathbf{v} - \mathbf{E} - j\omega_1 L\mathbf{i} \qquad\qquad (3)$$

where $\mathbf{i}$ is a converter current vector, $\mathbf{v}$ is a converter voltage vector, $\mathbf{E}$ is a grid voltage vector, L the filter inductance and $\omega_1$ the angular line frequency.

An equivalent electric circuit corresponding to equation (3) above is shown in fig. 3b, which shows from right to left a voltage source providing a voltage $\mathbf{v}$ and at a first end being connected to a first end of the filter inductance L, through which the converter current $\mathbf{i}$ is running. The grid voltage $\mathbf{E}$ is here provided between a second end of the filter inductance L and a second end of the voltage source $\mathbf{v}$.

Through comparing the two circuits in fig. 3a and 3b it can be seen that if the stator current $\mathbf{i}_s$ is mapped onto the converter current $\mathbf{i}$, i.e. that the converter current $\mathbf{i}$ is set equal to the stator current $\mathbf{i}_s$, and the stator voltage $\mathbf{v}_s$, is mapped onto the grid voltage $\mathbf{E}$, while the leakage inductance $L_\sigma$ is set equal to the filter inductance L, the converter voltage $\mathbf{v}$ in fig. 3b corresponds to the back emf $\mathbf{e}_M$ plus the voltage across the magnetizing branch (including the magnetizing inductance $L_M$) and the rotor branch (including the rotor resistance $R_R$ and the current dependent voltage source $j\omega_1 L_M i_M$) in fig. 3a. This opens up the possibility of emulating the electrical dynamics of the synchronous machine with the voltage source converter by selecting the converter voltage reference, i.e. the control signal for the voltage converter, as:

$$\mathbf{v}_{REF} = \mathbf{e}_M - R_R\mathbf{i} + (R_R - j\omega_1 L_M)\mathbf{i}_M \qquad\qquad (4)$$

and with

$$d\mathbf{i}_M/dt = (R_R/L_M) * (\mathbf{i} - \mathbf{i}_M) \qquad\qquad (5)$$

Here $\mathbf{v}_{REF}$, $\mathbf{e}_M$, $\mathbf{i}$ and $\mathbf{i}_M$ are variable vectors, while $R_R$, $\omega_1$ and $L_M$ are constant. $R_R$ and $L_M$ may furthermore be chosen freely. Provided that $\mathbf{v} = \mathbf{v}_{REF}$, which can be assumed if the control device has a negligible time delay and operates in its linear region, i.e. that overmodulation is avoided, the electrical dynamics of the synchronous machine are thereby emulated.

Through equation (5) the differential equation (2), which sets out the relationship between the stator current $\mathbf{i}_s$ and the magnetizing current $\mathbf{i}_M$ through the magnetizing inductance $L_M$, is applied on the converter current $\mathbf{i}$. Through equation (4) the control signal $\mathbf{v}_{REF}$ is furthermore obtained through combining three terms, which combining here includes summing up these three terms. The three terms are here a first term ($-R_R\mathbf{i}$) that is dependent on the converter current $\mathbf{i}$ and is here a multiplication of this current with a first factor $-R_R$, a second term $[(R_R - j\omega_1 L_M)\mathbf{i}_M]$ being dependent on the magnetizing current $\mathbf{i}_M$ and here a multiplication of the magnetizing current $\mathbf{i}_M$ with a second factor $(R_R - j\omega_1 L_M)$ as well as a third term $\mathbf{e}_M$ representing the variable back emf, i.e. representing the back electromotive force of the synchronous machine model.

These two equations (4) and (5) may in one embodiment of the present invention be all that is used for controlling a voltage source converter according to the present invention.

It may however be of interest to limit the converter current **i** in order to prevent overcurrent, particularly during faults. In order to do this closed loop current control using a current control law may be applied according to:

$$\mathbf{v}_{REF} = \alpha_c L(\mathbf{i}_{REF} - \mathbf{i}) + \mathbf{E}_f \qquad (6)$$

where $\alpha_c$ is a desired closed-loop bandwidth, $\mathbf{i}_{REF}$ is a converter current reference, i.e. a reference for the converter current, and $\mathbf{E}_f$ is a feed-forward term obtained through low-pass filtering the grid voltage $\mathbf{E}$. Here $\mathbf{i}_{REF}$ and $\mathbf{E}_f$ are variable vectors, while $\alpha_c$ is a constant.

Substituting equation (6) in equation (3) then yields, assuming that $\mathbf{v} = \mathbf{v}_{REF}$:

$$L * d\mathbf{i}/dt = \alpha_c L(\mathbf{i}_{REF} - \mathbf{i}) + \mathbf{E}_f - \mathbf{E} - j\omega_1 L\mathbf{i} \qquad (7)$$

If $\alpha_c$ is selected large enough (for instance at least 1000 rad/s), steady state is reached quickly. Through setting $d/dt = 0$ and $\mathbf{E}_f = \mathbf{E}$ and solving for **i**, the following relationship is obtained:

$$\mathbf{i} = [\alpha_c L / ((\alpha_c + j\omega_1)L)] * \mathbf{i}_{REF} \Rightarrow$$

$$|\mathbf{i}| = |[\alpha_c L / ((\alpha_c + j\omega_1)L)]| * |\mathbf{i}_{REF}| \Rightarrow |\mathbf{i}| \le |\mathbf{i}_{REF}| \qquad (8)$$

From this it can be seen that even though the actual current **i** will not follow its reference $\mathbf{i}_{REF}$ perfectly, which is normally not required, the current **i** will be smaller than the reference $\mathbf{i}_{REF}$, showing that overcurrent is prevented, except perhaps briefly during a transient time period determined by $\alpha_c$.

Through combining equation (6) with equation (4) $\mathbf{i}_{REF}$ can be obtained according to:

$$\alpha_c L(\mathbf{i}_{REF} - \mathbf{i}) + \mathbf{E}_f = \mathbf{e}_M - R_R\mathbf{i} + (R_R - j\omega_1 L_M)\mathbf{i}_M \Rightarrow$$

$$\mathbf{i}_{REF} = [1/(\alpha_c L)] * [\mathbf{e}_M - \mathbf{E}_f + (\alpha_c L - R_R)\mathbf{i} + (R_R - j\omega_1 L_M)\mathbf{i}_M] \qquad (9)$$

Here $\mathbf{i}_{REF}$ is the ideal reference current. A reference current $\mathbf{i}_{REF}$ after limitation (LIM) to a maximum allowed value can then be obtained through:

$$\mathbf{i}_{REF,LIM} = LIM(\mathbf{i}_{REF}) \qquad (10)$$

The converter current reference is here also obtained through combining a number of terms and here the combining includes the summing up of these terms. This sum is furthermore multiplied by a third factor $[1/(\alpha_c L)]$. The terms that are used in this combination are a first term dependent on the converter current **i**, a second term dependent on the magnetizing current $\mathbf{i}_M$, a third term $\mathbf{e}_M$ representing the back emf as well as a fourth term $\mathbf{E}_f$ that is a grid voltage feed forward term. The second and third terms are here the same as in equation (4), while the first term is slightly different. The first term does have a first factor used for multiplying the converter current. However this first factor is now $(\alpha_c L - R_R)$.

As the expression in equation (9) is applied, perhaps after limitation according to equation (10), it is also clear that the control signal $v_{REF}$ is based on the difference between the reference current and the converter current. This difference is here furthermore multiplied with a fourth factor ($\alpha_c L$). The control signal is then obtained as this difference multiplied with the fourth factor plus the feed forward term of the grid voltage.

The emf voltage term may be provided as a variable that is dependent on the grid voltage **E** and more particularly as a variable that is dependent on a difference between a grid voltage reference and the grid voltage. This difference may then be provided as the difference between the grid voltage reference and the absolute value of the grid voltage. This difference may furthermore be amplified with a gain as well as possibly high-pass filtered.

An exciter that provides such an emf term may then provide it according to:

$$\mathbf{e}_M = [K_E/(1+sT_E)] * (\mathbf{E}_{REF} - |\mathbf{E}|) \qquad (11)$$

where $K_E$ is the exciter gain, $T_E$ is the exciter time constant and $\mathbf{E}_{REF}$ is a grid voltage reference vector. Both the gain and time constant may here be set freely. The gain may for instance be set to a gain of above one, involving amplification, of one, involving no amplification or between one and zero, involving an attenuation. If the gain $K_E$ is selected as a real number, the dq frame reference will be approximately aligned with the grid voltage. Here a high exciter gain may with advantage be chosen, in the region of ten times the normalized grid voltage, while the time constant may have a value of a few hundred ms.

The filter in equation (11) above is a first order filter. It should here be realized that a higher order filter may be used instead. In case the output filter inductance between the grid and the voltage source converter is realized as a transformer, it is possible to obtain the absolute value of the grid voltage through the voltage provided on the side of the transformer that faces the converter instead of the absolute value of the grid voltage.

In this way the electrical dynamics of a non-salient synchronous machine are emulated and used for controlling a voltage source converter.

As an option, it is furthermore possible to also emulate and use the mass mechanical dynamics of a non-salient synchronous machine in the control of the voltage source converter.

For a two-pole synchronous machine, the mechanical one-mass dynamics are given by:

$$J' d\omega_1/dt = P_m - P_e \qquad (12)$$

where J' is the total inertia scaled with the angular synchronous frequency, $P_m$ is the mechanical power, i.e. the power from the turbine, and $P_e$ is the electrical active power.

$\omega_1$ is furthermore considered to be the instantaneous angular line frequency in the dq frame of the control device, i.e. a direct correspondence to the rotor speed in a "real" synchronous machine. In order to emulate the mechanical dynamics, it is according to the invention assumed that $P_m$ is instantaneously controllable and therefore the mechanical power can be selected as:

$$P_m = P_{REF} + K_G * (\omega_{REF} - \omega_1) \qquad (13)$$

where $P_{REF}$ is a reference active power, $K_G$ is a governor droop gain and $\omega_{REF}$ is the reference line frequency, i.e. the nominal synchronous frequency. A typical droop gain in a 50 Hz system is $K_G = 50$ times the normalized grid voltage, i.e., a 1 Hz frequency deviation corresponds to a power deviation equaling the rated power.

Combining (12) and (13) and solving for $\omega_1$ yields:

$$\omega_1 = [1/(1+sJ'/K_G)] * [\omega_{REF} + (1/K_G) * (P_{REF} - P_E) \qquad (14)$$

This means that the angular line frequency of the voltage source converter is selected as a low-pass filtering of a mass dynamics expression, which mass dynamics expression here includes the reference line frequency plus a term that acts as a proportional controller for the active electrical power. This term acting as a proportional controller includes a factor $(1/K_G)$ that is multiplied with the difference between the reference active power and the electrical active power. This factor may be set freely and can be set to between one and zero, i.e. attenuation, to one, i.e. no influence on the difference, or to above one, i.e. amplification. The proportional controller term acts as a contribution to the primary frequency control. As can be seen in equation (14), the filter term is dependent on the settable total inertia J'.

The emulated inertia and the governor droop gain can be selected freely as long as the voltage source converter is connected to an energy source that has an ample energy reserve, e.g. a wind turbine or when one of the control devices in the system in fig. 1 uses the above mentioned control, while the other controls the dc-link voltage and is connected to a fairly strong grid.

However, if both control devices in fig. 1 use the controlling according to the principles of the present invention, then the dc link control device, which is the first control device, must use a small $K_G$ and a very small J' in order to obtain fast power-control action for the dc-link voltage controller, whose output is set as $P_{REF}$.

The above mentioned low pass filtered mass dynamics expression, i.e. the angular line frequency, may then be integrated in order to obtain an angle $\theta_1$ with which the control signal $\mathbf{v}_{REF}$ is adjusted or transformed in order to transform the control signal to the stationary reference frame.

This transformation is performed according to

$$\mathbf{v}_{REF,TR} = \exp(-j\theta_1) * \mathbf{v}_{REF} \qquad\qquad (15)$$

In order to perform control according to the principles described above, the second control entity 28 may according to a preferred embodiment of the present invention be provided in the form of a number of control units, which are schematically shown in fig. 4.

The second control entity 28 includes a first subtracting unit 40. The first subtracting unit 40 is connected to an exciter unit 42, which in turn is connected to an electrical dynamics unit 44. The electrical dynamics unit 44 is connected to a current limiting unit 46. The current limiting unit 46 is connected to a current control unit 48, which is connected to a transforming unit 50.

There is also a second subtracting unit 52 that is connected to a governor unit 54. The governor unit 54 is in turn connected to an adding unit 56, which in turn is connected to a low pass filtering unit 58. The low pass filtering unit 58 is connected to an integrating unit 60, which is finally connected to the transforming unit 50.

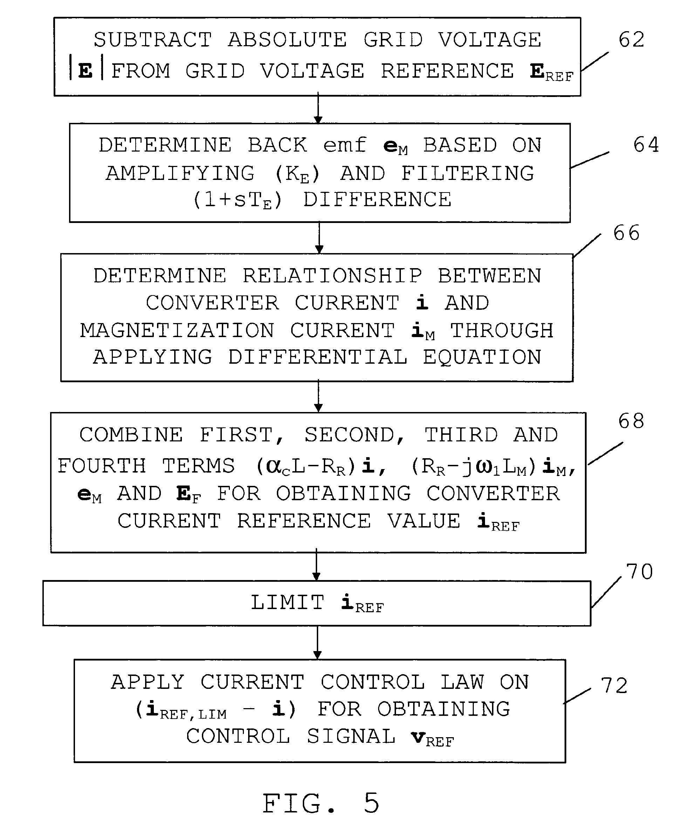

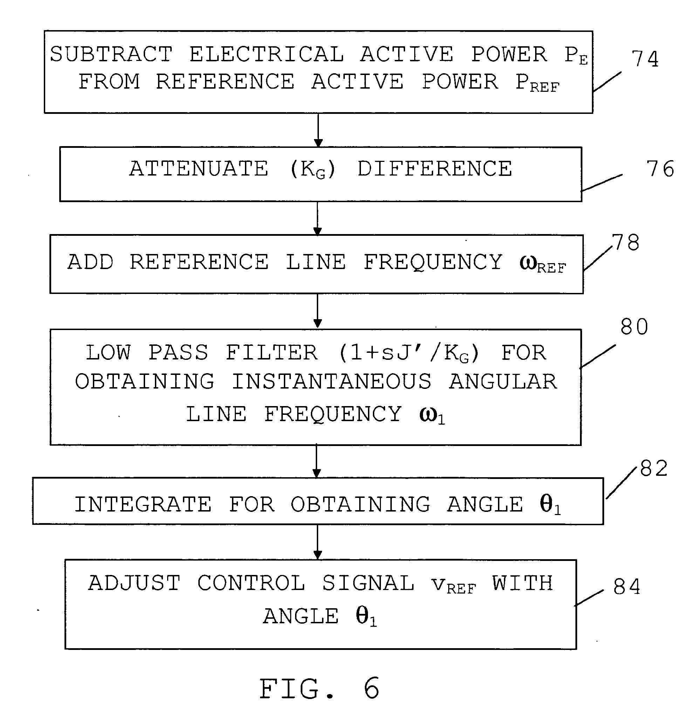

The various units in fig. 4 all perform activities set out by the above mentioned equations and will now be described shortly also with reference being made to fig. 5, which shows a flow chart of a number of method steps being performed by units 40 - 48 in fig. 4 as well as to fig. 6, which shows a number of method steps being performed by units 50 - 60 in fig. 4.

The first subtracting unit 40 receives the absolute value $|\mathbf{E}|$ of the grid voltage $\mathbf{E}$ as well as the grid voltage reference $\mathbf{E}_{REF}$ and subtracts the absolute value $|\mathbf{E}|$ of the grid voltage $\mathbf{E}$ from this reference $\mathbf{E}_{REF}$, step 62. This difference is then provided to the exciter unit 42, which goes on and determines the back emf term $\mathbf{e}_M$. Here this term is determined through amplifying $(K_E)$ and filtering $(1+sT_E)$ the difference, step 64, i.e. through performing the activities in equation (11). The back emf $\mathbf{e}_M$ is then provided to the electrical dynamics unit 44, which also receives measurement values of the converter current $\mathbf{i}$. The electrical dynamics unit 44 here determines the relationship between the converter current $\mathbf{i}$ and the magnetizing current $\mathbf{i}_m$ through applying the differential equation (5), step 66. It also combines the first term that is dependent on the converter current, the second term that is dependent on the magnetizing current, the third term $e_M$ representing the back emf and the fourth feed forward voltage term $\mathbf{E}_F$ for obtaining the converter current reference value $i_{REF}$, step 68. This combination is here performed according to equation (9). This converter current reference value $\mathbf{i}_{REF}$ is then forwarded to the current limiting unit 46, which goes on and limits the converter current reference value according to equation (10), step 70, and sends this limited current value $\mathbf{i}_{REF,LIM}$ to the current control unit 48. The current control unit 48 then generates the control signal $\mathbf{v}_{REF}$ according to the current control law based on a difference between the limited current reference $\mathbf{i}_{REF,LIM}$ and the converter current $\mathbf{i}$, as is specified in equation (6). The control signal $\mathbf{v}_{REF}$ is then submitted to the transforming unit 50.

As was mentioned above the current limitation process may be omitted. This means that the limiting unit 46 and the current control unit 48 may be omitted. In this case the electrical dynamics unit 44 could be directly connected to the transforming unit 50 or directly provide a control signal for the PWM circuit. However, it would still determine the relationship between the converter current $\mathbf{i}$ and the magnetizing current $\mathbf{i}_m$ according to equation (5). However in this case it would determine the control signal $\mathbf{v}_{REF}$ through using equation (4) but not determine the converter current

reference value $\mathbf{i}_{REF}$ through using equation (9).

In order to be able to adjust the control signal $\mathbf{v}_{REF}$, the second subtracting unit 52 receives the reference active power $P_{REF}$ and the electrical active power $P_E$ and subtracts the electrical active power $P_E$ from the reference active power $P_{REF}$, step 74. It then provides this difference to the governor unit 54, which goes on and attenuates this difference by multiplying it with $1/K_G$, step 76. This attenuated difference $(P_{REF}- P_E)/K_G$ is then supplied to the adding unit 56. The adding unit 56 also receives the reference line frequency $\omega_{REF}$. The adding unit 56 then adds the reference line frequency $\omega_{REF}$ to the attenuated difference, step 78, and forwards the sum to the low pass filtering unit 58, which goes on and low pass filters this sum received from the adding unit using $J'/K_G$ as filter terms for obtaining the angular line frequency $\omega_1$, step 80. The angular line frequency $\omega_1$ is then forwarded to the integrating unit 60, which integrates it for obtaining the angle $\theta_1$, step 82. The angle $\theta_1$ is then sent to the transforming unit 50, which adjusts or transforms the control signal $\mathbf{v}_{REF}$ with the angle $\theta_1$ according to equation (15) in order to obtain the adjusted control signal $\mathbf{v}_{REF,TR}$.

The adjusted control signal $\mathbf{v}_{REF,TR}$ is then sent from the control entity 28 to the corresponding PWM circuit 32, which goes on and controls the voltage source converter 20.

In this way control of the voltage source converter is provided. A similar type of control can of course also be applied by the first control device on the first voltage source converter for which reason the first control entity includes the same types of control units as the second control entity. This control does as was mentioned above contribute to the voltage control of the second grid. A reduction of the grid voltage magnitude can then be counteracted by an injection of reactive power from the voltage source converter.

The present invention has a number of further advantages. It provides stability regardless of the grid characteristics. This is important since it is often necessary to maintain stability of the grid regardless of the grid strength and regardless of the dynamics of the load, machines and other converters connected to the grid electrically close to the voltage source converter. This can also be applied for passive grids. The invention also allows active power control that can be maintained at a certain reference in the steady state. It furthermore contributes to the primary frequency control. A slight reduction of the line frequency should lead to an increase of the active power injected to the grid from the voltage source converter given that excess power capacity exists. Similarly a slight increase of the line frequency results in a reduction of the voltage source converter output power.

The type of voltage source converter control that has been described above is furthermore promising regarding use in relation to weak or passive grids, including wind-farm applications. Tuning of the control device may then become much more straight-forward and robust as compared with conventional control devices, since experience in dynamics and control of synchronous machines, which is vast, can be relied upon.

The measurement values used for control in the control entity can be obtained from detecting units through A/D-converting units. Similarly the control signal to the PWM circuit may be D/A converted. The output power can furthermore easily be determined through currents and voltages detected in the above described way.

The control entity of the present invention can be provided in the form of logic circuits. This means the the control units may be provided in the form of logic circuits. However the control entity is preferably provided in the form of software. This means that such software or computer program code may be provided in a control device, which control device may be a control computer including one or more processors and associated program memories where the computer program code is stored. This one or more processor is then set to perform the activities of the control entity outlined by the program code. The computer program code may furthermore be provided on a data carrier, which will perform the functionality of the control entity, when being loaded into such a control computer. The data carrier may be a moveable data carrier like a CD ROM disc or a memory stick. The data carrier may also be a server, from which the computer program code may be loaded onto a control computer via a computer network.

There are a number of possible variations that can be made to the present invention apart from those already mentioned. The control device was above described as including the PWM circuit. It should be realised that this may be provided as a separate entity and need not be included in the device of the present invention. Also A/D and D/A units may be provided as separate entities. In its simplest form the control device may include only the control entity described above. The invention is not limited to PWM, but other ways of controlling a voltage source converter may be contemplated. As the use of the mass mechanics of the non-salient synchronous machine model is optional, it is furthermore evident that the control device need not include any power determining unit. For the same reason the control entity does not have to have any second subtracting unit, governor unit, adding unit, low pass filtering unit, integrating unit and transforming unit either.

From the foregoing discussion it is evident that the present invention can be varied in a multitude of ways. It shall consequently be realized that the present invention is only to be limited by the following claims.

**Claims**

**1.** A method for controlling a voltage source converter (16; 20) connected to a power grid (12; 24) and comprising the steps of:

- detecting (34) at least one electrical property (E, i) of an interface between the grid and the voltage source converter, and
- controlling (39) the voltage source converter (16; 20) through using a control signal ($v_{REF,TR}$) obtained (38) through a mapping of an electrical model of a non-salient synchronous machine onto an electrical model of the voltage source converter, through applying the detected electrical property of the interface between the grid and the voltage source converter in said mapped model, where the electrical model of the non-salient synchronous machine reflects the electrical dynamics of this synchronous machine and through applying (38) an emulation of the mass mechanical dynamics of the non-salient synchronous machine for adjusting the control signal, wherein the applying of an emulation of the mass mechanical dynamics comprises low-pass filtering (80) a mass dynamics expression, which mass dynamics expression includes a reference line frequency plus a term that acts as a proportional controller for the active electrical power in order for obtaining an angular line frequency of the voltage source converter.

2. A method according to claim 1, wherein the mapping comprises a setting of a filter inductance (L) that faces the grid in the electrical model of the voltage source converter to be equal to a total leakage inductance ($L_\sigma$) of the synchronous machine model.

3. A method according to claim 1 or 2, wherein the at least one detected electrical property includes a converter current (i) running between the grid and the voltage source converter and the mapping includes a setting of said converter current to be equal to a stator current($i_s$) of the synchronous machine model and the step of controlling comprises applying (66) a differential equation that sets out the relationship between the stator current ($i_s$) and a magnetizing current ($i_M$) through a magnetizing inductance ($L_M$) of the synchronous machine model onto the converter current (**i**).

4. A method according to claim 3, wherein the step of controlling comprises controlling the voltage source converter using a control signal ($v_{REF,TR}$) obtained through combining (68) a first term being dependent on the converter current (**i**), a second term being dependent on the magnetizing current ($i_M$) and a third term ($e_M$) representing a variable back electromotive force of the synchronous machine model.

5. A method according to claim 4, wherein the step of controlling comprises combining (68) the first, second and third terms for obtaining a converter current reference value ($i_{REF}$), where the control signal used is dependent (72) on the difference between the converter current reference value and the converter current.

6. A method according to claim 5, wherein one detected electrical property of the interface between the grid and the voltage source converter is the grid voltage (**E**) and the step of combining (68) involves also combining a feed forward term ($E_F$) of the grid voltage for obtaining the converter current reference value and the control signal is also dependent on the feed forward term ($E_F$) of the grid voltage.

7. A method according to claim 5 or 6, wherein the step of controlling includes limiting (70) the converter current reference value.

8. A method according to any of claims 4 - 7, wherein one detected electrical property of the interface between the grid and the voltage source converter is the grid voltage (**E**) and the step of controlling includes determining (64) the third term representing the back electromotive force based on the difference (62) between a grid voltage reference ($E_{REF}$) and the absolute grid voltage (|**E**|).

9. A method according to any previous claim, wherein said term that acts as a proportional controller for the active electrical power is a term that is dependent on a settable total inertia of the mechanical dynamics and the applying of an emulation of the mass mechanical dynamics comprises applying (82, 84) the low pass filtered term for adjusting the control signal.

10. A method according to claim 9, further comprising the step of determining (36) the electrical active power ($P_E$) of the voltage source converter, and the applying of an emulation of the mass mechanical dynamics involves providing (76) a term being proportional to a difference between a reference active power ($P_{REF}$) and the electrical active power ($P_E$) for use in the mass dynamics expression.

11. A method according to claim 9 or 10, further comprising the step of integrating (82) the low pass filtered mass dynamics expression in order to obtain an angle ($\theta_1$) with which the control signal is to be adjusted.

12. A device (25; 26) for controlling a voltage source converter (16; 20) connected to a power grid (12; 24) and comprising:

    - a first input for receiving at least one detected electrical property (E, i) of an interface between the grid and the voltage source converter, and
    - a control entity (27; 28) arranged to control the voltage source converter (16; 20) through a control signal ($v_{REF,TR}$) obtained through using a mapping of an electrical model of a non-salient synchronous machine onto an electrical model of the voltage source converter and through applying the detected electrical property of the interface between the grid and the voltage source converter in said mapped model, where the electrical model of the non-salient synchronous machine reflects the electrical dynamics of this synchronous machine,
    - wherein the control entity when being arranged to control the voltage source converter is further arranged to apply an emulation of the mass mechanical dynamics of the non-salient synchronous machine for adjusting the control signal, where the applying of an emulation of the mass mechanical dynamic comprises low-pass filtering a mass dynamics expression, which mass dynamics expression includes a reference line frequency plus a term that acts as a proportional controller for the active electrical power in order for obtaining an angular line frequency of the voltage source converters.

13. A device according to claim 12, wherein the mapping comprises a setting of a filter inductance (L) that faces the grid in the electrical model of the voltage source converter to be equal to a total leakage inductance ($L_\sigma$) of the synchronous machine model.

14. A device according to claim 12 or 13, wherein at least one detected electrical property of the interface between the grid and the voltage source converter is a converter current (i) running between the grid and the voltage source converter and the mapping includes a setting of the converter current (i) to be equal to a stator current ($\mathbf{i}_s$) of the synchronous machine model and the control entity (28) is further arranged, when controlling the voltage source converter, to apply a differential equation that sets out the relationship between the stator current ($\mathbf{i}_s$) and a magnetizing current ($\mathbf{i}_M$) through a magnetizing inductance ($L_M$) of the synchronous machine model onto the converter current ($\mathbf{i}$).

15. A device according to claim 14, wherein the control entity when being arranged to control the voltage source converter is arranged to control the voltage source converter using a control signal ($\mathbf{v}_{REF,TR}$) obtained through combining a first term being dependent on the converter current ($\mathbf{i}$), a second term being dependent on the magnetizing current ($\mathbf{i}_M$) and a third term ($\mathbf{e}_M$) representing a variable back electromotive force of the synchronous machine model.

16. A device according to claim 15, wherein the control entity (28) includes an electrical dynamics unit (44) arranged to combine the first, second and third terms for obtaining a converter current reference value ($\mathbf{i}_{REF}$) as well as a current control unit (48) arranged to provide the control signal based on the difference between the converter current reference value and the converter current.

17. A device according to claim 16, wherein one detected electrical property of the interface between the grid and the voltage source converter is the grid voltage (**E**) and the electrical dynamics unit (44), when being arranged to perform the combining, is arranged to also combine a feed forward term ($\mathbf{E}_F$) of the grid voltage for obtaining the converter current reference value and the current control unit (48) is arranged to provide the control signal also based on the feed forward term ($\mathbf{E}_F$) of the grid voltage.

18. A device according to claim 16 or 17, further comprising a current limiting unit (46) arranged to limit the converter current reference value.

19. A device according to any of claims 15 - 18, wherein one detected electrical property of the interface between the grid and the voltage source converter is the grid voltage (**E**) and further comprising an exciter unit (42) arranged to determine the third term ($\mathbf{e}_M$) representing the back electromotive force based on the difference between a grid voltage reference ($\mathbf{E}_{REF}$) and the absolute grid voltage ($|\mathbf{E}|$).

20. A device according to any of claims 12 - 19, wherein said term that acts as a proportional controller for the active electrical power is a term that is dependent on a settable total inertia of the mechanical dynamics and the control entity is further arranged to apply the low pass filtered term for adjusting the control signal, when applying an emulation of the mass mechanical dynamics.

**21.** A device according to claim 20, wherein the control device further includes a power determining unit (29; 30) arranged to determine the electrical active power ($P_E$) of the voltage source converter and the control entity includes a governor unit (54) arranged to provide a term that is proportional to a difference between a reference active power ($P_{REF}$) and the electrical active power ($P_E$) for use by the low pass filtering unit (58) in the mass dynamics expression.

**22.** A device (10') according to claim 20 or 21, wherein the control entity further includes an integrator unit (60) arranged to integrate the low pass filtered mass dynamics expression in order to obtain an angle ($\theta_1$) with which the control signal is to be adjusted.

**23.** A device (10') according to claim 22, wherein the control entity further includes a transforming unit (50) for adjusting the control signal with said angle.

**24.** A computer program product provided on a data carrier for controlling a voltage source converter (16; 20) connected to a power grid (12; 24), and comprising computer program code to make a control device (25; 26) perform the method according to any of claims 1 - 11, when said code is loaded into said control device.

**Patentansprüche**

**1.** Ein Verfahren zum Kontrollieren eines Spannungsquellenumrichters (16; 20), der an ein Stromnetz (12; 24) angeschlossen ist, und das folgende Schritte aufweist:

- Erfassen (34) wenigstens einer elektrischen Eigenschaft (E, i) einer Schnittstelle zwischen dem Netz und dem Spannungsquellenumrichter, und
- Kontrollieren, d.h. Steuern bzw. Regeln, (39) des Spannungsquellenumrichters (16; 20) durch Verwendung eines Kontrollsignals ($V_{REF,TR}$), das erhalten wird (38) durch eine Abbildung eines elektrischen Modells einer Vollpol-Synchronmaschine bzw. einer Nicht-Schenkelpol-Synchronmaschine auf ein elektrisches Modell des Spannungsquellenumrichters, durch Anwenden der erfassten elektrischen Eigenschaft der Schnittstelle zwischen dem Netz und dem Spannungsquellenumrichter in dem genannten abgebildeten Modell, wo das elektrische Modell der Vollpol-Synchronmaschine bzw. Nicht-Schenkelpol-Synchronmaschine die elektrische Dynamik dieser Synchronmaschine widerspiegelt und durch Anwenden (38) einer Emulation der massenmechanischen Dynamik der Vollpol-Synchronmaschine bzw. Nicht-Schenkelpol-Synchronmaschine zum Einstellen des Kontrollsignals, wobei das Anwenden einer Emulation der massenmechanischen Dynamik Tiefpass-Filterung (80) eines Massendynamik-Ausdrucks aufweist, welcher Massendynamik-Ausdruck eine Bezugsfrequenz plus einen Term umfasst, der als ein Proportionalkontroller für die aktive elektrische Leistung wirkt, zum Erhalten einer Netzkreisfrequenz des Spannungsquellenumrichters.

**2.** Verfahren nach Anspruch 1, wobei die Abbildung eine Einstellung einer Filterinduktivität (L) umfasst, die dem Netz zugewandt ist in dem elektrischen Modell des Spannungsquellenumrichters, die gleich einer Gesamtstreuinduktivität ($L_\sigma$) des Synchronmaschinenmodells sein soll.

**3.** Verfahren nach Anspruch 1 oder 2, wobei die mindestens eine erfasste elektrische Eigenschaft einen Umrichterstrom (i) umfasst, der zwischen dem Netz und dem Spannungsquellenumrichter fließt, und die Abbildung eine Einstellung des Umrichterstroms umfasst, der gleich einem Statorstrom ($i_s$) des Synchronmaschinenmodells sein soll und der Schritt des Kontrollierens umfasst das Anwenden (66) einer Differenzialgleichung, die die Beziehung zwischen dem Statorstrom ($i_s$) und einem magnetisierenden Strom (iM) auslegt durch eine Magnetisierungsinduktivität ($L_M$) des Synchronmaschinenmodells auf den Umrichterstrom (i).

**4.** Verfahren nach Anspruch 3, wobei der Schritt des Kontrollierens Kontrollieren des Spannungsquellenumrichters mittels eines Kontrollsignals ($V_{REF,TR}$) aufweist, das erhalten wird durch Kombinieren (68) eines ersten Terms, der abhängig von dem Umrichterstrom (i) ist, eines zweiten Terms, der abhängig von dem Magnetisierungsstrom ($i_M$) ist und eines dritten Terms ($e_M$), der eine variable gegenelektromotorische Kraft des Synchronmaschinenmodells darstellt.

**5.** Verfahren nach Anspruch 4, wobei der Schritt des Kontrollierens Kombinieren (68) des ersten, zweiten und dritten Terms zum Erhalten eines Bezugswerts ($i_{REF}$) des Umrichterstroms aufweist, wobei das verwendete Kontrollsignal von der Differenz zwischen dem Bezugswert des Umrichterstroms und dem Umrichterstrom abhängt (72).

**6.** Verfahren nach Anspruch 5, wobei eine erfasste elektrische Eigenschaft der Schnittstelle zwischen dem Netz und dem Spannungsquellenumrichter die Netzspannung (E) ist und der Schritt des Kombinierens (68) auch Kombinieren eines Vorwärtsterms ($E_F$) der Netzspannung involviert zum Erhalten des Bezugswerts des Umrichterstroms und das Kontrollsignal auch von dem Vorwärtsterm ($E_F$) der Netzspannungabhängig ist.

**7.** Verfahren nach Anspruch 5 oder 6, wobei der Schritt des Kontrollierens Begrenzen (70) des Bezugswerts des Umrichterstromsumfasst.

**8.** Verfahren nach einem der Ansprüche 4 - 7, wobei eine erfasste elektrische Eigenschaft der Schnittstelle zwischen dem Netz und dem Spannungsquellenumrichter die Netzspannung (E) ist und der Schritt des Kontrollierens umfasst Bestimmen (64) des dritten Terms, der die gegenelektromotorische Kraft darstellt, basierend auf der Differenz (62) zwischen einem Netzspannungsbezug ($E_{REF}$) und der absoluten Netzspannung ($|E|$).

**9.** Verfahren nach einem der vorhergehenden Ansprüche, wobei der Term, der als ein Proportionalkontroller für die aktive elektrische Leistung wirkt, ein Term ist, der abhängig von einer einstellbaren Gesamtträgheit der mechanischen Dynamik ist und das Anwenden einer Emulation der massenmechanischen Dynamik Anwenden (82, 84) des Tiefpassfilterterms zum Einstellen des Kontrollsignals aufweist.

**10.** Verfahren nach Anspruch 9, das ferner den Schritt von Bestimmen (36) der elektrischen Wirkleistung ($P_E$) des Spannungsquellenumrichters aufweist, und das Anwenden einer Emulation der massenmechanischen Dynamik Bereitstellen (76) eines Terms involviert, der proportional einer Differenz zwischen einem Bezugswirkleistung ($P_{REF}$) und der elektrischen Wirkleistung ($P_E$) für die Verwendung in dem Massendynamik-Ausdruck ist.

**11.** Verfahren nach Anspruch 9 oder 10, ferner aufweisend den Schritt von Integrieren (82) des tiefpassgefilterten Massendynamik-Ausdrucks zum Erhalten eines Winkels ($\theta_1$), mit denen das Kontrollsignal einzustellen ist.

**12.** Vorrichtung (25; 26) zum Kontrollieren eines Spannungsquellenumrichters (16; 20), der an ein Stromnetz (12; 24) angeschlossen ist und aufweist:

- einen ersten Eingang zum Empfangen von mindestens einer erfassten elektrischen Eigenschaft (E, i) einer Schnittstelle zwischen dem Netz und dem Spannungsquellenumrichter, und
- eine Kontrolleinheit (27; 28), die angepasst ist, den Spannungsquellenumrichter (16; 20) zu Kontrollieren durch ein Kontrollsignal ($V_{REF,TR}$), das durch Verwenden einer Abbildung eines elektrischen Modells einer Vollpol-Synchronmaschine bzw. Nicht-Schenkelpol-Synchronmaschine auf ein elektrisches Modell des Spannungsquellen¬umrichters und durch Anwenden der erfassten elektrischen Eigenschaft der Schnittstelle zwischen dem Netz und dem Spannungsquellen¬umrichter in dem genannten abgebildeten Modell erhalten wird, wo das elektrische Modell der Vollpol-Synchronmaschine bzw. Nicht-Schenkelpol-Synchronmaschine die elektrische Dynamik dieser Synchronmaschine widerspiegelt,
- wobei die Kontrolleinheit beim angepasst sein zum Kontrollieren des Spannungsquellen¬umrichters ferner angepasst ist eine Emulation der massenmechanischen Dynamik der Vollpol-Synchronmaschine bzw. Nicht-Schenkelpol-Synchronmaschine zum Einstellen des Kontrollsignals anzuwenden, wobei das Anwenden einer Emulation der massenmechanischen Dynamik iefpass-Filterung eines Massendynamik-Ausdrucks aufweist, welcher Massendynamik-Ausdruck eine Bezugsfrequenz plus einen Term umfasst, der als ein Proportionalkontroller für die aktive elektrische Leistung wirkt, zum Erhalten einer Netzkreisfrequenz des Spannungsquellenumrichters.

**13.** Vorrichtung nach Anspruch 12, wobei die Abbildung eine Einstellung einer Filterinduktivität (L) aufweist, die dem Netz zugewandt ist in dem elektrischen Modell des Spannungsquellenumrichters, die gleich einer Gesamtstreuin-duktivität ($L_\sigma$) des Synchron-maschinen¬modells sein soll.

**14.** Vorrichtung nach Anspruch 12 oder 13, wobei die mindestens eine erfasste elektrische Eigenschaft der Schnittstelle zwischen dem Netz und dem Spannungsquellenumrichter ist ein Umrichterstrom (i), der zwischen dem Netz und dem Spannungsquellenumrichter fließt und die Abbildung eine Einstellung des Umrichterstroms (i) umfasst, der gleich einem Statorstrom ($i_s$) des Synchronmaschinenmodells sein soll und die Kontrolleinheit (28) ferner angepasst ist, beim Kontrollieren des Spannungsquellenumrichters eine Differenzialgleichung anzuwenden, die die Beziehung zwischen dem Statorstrom ($i_s$) und einem magnetisierenden Strom ($i_M$) auslegt durch eine Magnetisierungsinduktivität ($L_M$) des Synchronmaschinenmodells auf den Umrichterstrom (i).

**15.** Vorrichtung nach Anspruch 14, wobei die Kontrolleinheit beim angepasst sein den Spannungsquellenumrichter zu Kontrollieren, angepasst ist den Spannungsquellen¬umrichter zu Kontrollieren mittels eines Kontrollsignals ($V_{REF,TR}$), das erhalten wird durch Kombinieren eines ersten Terms, der abhängig von dem Umrichterstrom (i) ist, eines zweiten Terms, der abhängig von dem Magnetisierungsstrom ($i_M$) ist und eines dritten Terms ($e_M$), der eine variable gegenelektromotorische Kraft des Synchronmaschinenmodells darstellt.

**16.** Vorrichtung nach Anspruch 15, wobei die Kontrolleinheit (28) umfasst eine Elektrodynamik-Einheit (44), die angepasst ist den ersten, zweiten und dritten Term zu kombinieren zum Erhalten eines Bezugswerts ($i_{REF}$) des Umrichterstroms sowie eine StromKontrolleinheit (48), die angepasst ist, das Kontrollsignal bereitzustellen, das auf der Differenz zwischen dem Bezugswert des Umrichterstroms und dem Umrichterstrom basiert.

**17.** Vorrichtung nach Anspruch 16, wobei eine erfasste elektrische Eigenschaft der Schnittstelle zwischen dem Netz und dem Spannungsquellenumrichter die Netzspannung (E) ist und die Elektrodynamik-Einheit (44), beim angepasst sein zum Durchführen des Kombinierens, angepasst ist auch einen Vorwärtsterm ($E_F$) der Netzspannung zu kombinieren zum Erhalten des Bezugswerts des Umrichterstroms und die StromKontrolleinheit (48) angepasst ist das Kontrollsignal bereitzustellen, das auch auf dem Vorwärtsterm ($E_F$) der Netzspannung basiert.

**18.** Vorrichtung nach Anspruch 16 oder 17, ferner aufweisend eine Strombegrenzungseinheit (46), die angepasst ist den Bezugswert des Umrichterstroms zu begrenzen.

**19.** Vorrichtung nach einem der Ansprüche 15 - 18, wobei eine erfasste elektrische Eigenschaft der Schnittstelle zwischen dem Netz und dem Spannungsquellenumrichter die Netzspannung (E) ist und ferner aufweisend eine Erregereinheit (42), die angepasst ist den dritten Term ($e_M$) zu bestimmen, der die gegenelektromotorische Kraft darstellt, basierend auf der Differenz zwischen einem Netzspannungsbezug ($E_{REF}$) und der absoluten Netzspannung (|E|).

**20.** Vorrichtung nach einem der Ansprüche 12 - 19, wobei der Term, der als ein Proportionalkontroller für die aktive elektrische Leistung wirkt, ein Term ist, der abhängig von einer einstellbaren Gesamtträgheit der mechanischen Dynamik ist und die Kontrolleinheit ferner angepasst ist den Tiefpassfilterterm anzuwenden zum Einstellen des Kontrollsignals, beim Anwenden einer Emulation der massenmechanischen Dynamik.

**21.** Vorrichtung nach Anspruch 20, wobei die Kontrolleinrichtung ferner umfasst eine Leistungsbestimmungseinheit (29; 30), die angepasst ist die elektrische Wirkleistung ($P_E$) des Spannungsquellenumrichters zu bestimmen und die Kontrolleinheit umfasst eine Reglereinheit (54), die angepasst ist einen Term bereitzustellen, der proportional einer Differenz zwischen einem Bezugswirkleistung ($P_{REF}$) und der elektrischen Wirkleistung ($P_E$) ist für die Verwendung durch die Tiefpassfiltereinheit (58) in dem Massendynamik-Ausdruck.

**22.** Vorrichtung (10') nach Anspruch 20 oder 21, wobei die Kontrolleinheit ferner umfasst eine Integratoreinheit (60), die angepasst ist, den tiefpassgefilterten Massendynamik-Ausdruck zu integrieren zum Erhalten eines Winkels ($\theta_1$), mit denen das Kontrollsignal einzustellen ist.

**23.** Vorrichtung (10') nach Anspruch 22, wobei die Kontrolleinheit ferner eine Transformationseinheit (50) umfasst zum Einstellen des Kontrollsignals mit dem genannten Winkel.

**24.** Ein Computerprogrammprodukt, bereitgestellt auf einem Datenträger zum Kontrollieren eines Spannungsquellenumrichters (16; 20), der an ein Stromnetz (12; 24) angeschlossen ist, und aufweisend einen Computer-Programmcode zum Veranlassen einer Kontrollvorrichtung (25; 26), das Verfahren nach einem der Ansprüche 1 - 11 durchzuführen, wenn der Code in die Kontrollvorrichtung geladen ist.

## Revendications

**1.** Procédé de commande d'un convertisseur de source de tension (16 ; 20) connecté à un réseau électrique (12 ; 24) et comprenant les étapes suivantes :

- détecter (34) au moins une propriété électrique (E, i) d'une interface entre le réseau et le convertisseur de source de tension, et
- commander (39) le convertisseur de source de tension (16 ; 20) par l'intermédiaire d'un signal de commande ($V_{REF,TR}$) obtenu (38) par l'intermédiaire d'une mise en correspondance d'un modèle électrique d'une machine synchrone non saillante avec un modèle électrique du convertisseur de source de tension, par application de la propriété électrique détectée de l'interface entre le réseau et le convertisseur de source de tension dans ledit modèle mis en correspondance, où le modèle électrique de la machine synchrone non saillante reflète la dynamique électrique de cette machine synchrone et par application (38) d'une émulation de la dynamique mécanique de masse de la machine synchrone non saillante pour régler le signal de commande, dans lequel l'application d'une émulation de la dynamique mécanique de masse comprend le filtrage passe-bas (80) d'une expression de dynamique de masse, laquelle expression de dynamique de masse comprend une fréquence de ligne de référence plus un terme qui agit en tant que régulateur proportionnel pour la puissance électrique active afin d'obtenir une fréquence de ligne angulaire du convertisseur de source de tension.

2. Procédé selon la revendication 1, dans lequel la mise en correspondance comprend un réglage d'une inductance de filtre (L) qui fait face au réseau dans le modèle électrique du convertisseur de source de tension pour qu'elle soit égale à une inductance de fuite totale ($L_\sigma$) du modèle de machine synchrone.

3. Procédé selon la revendication 1 ou 2, dans lequel ladite au moins une propriété électrique détectée comprend un courant de convertisseur (i) circulant entre le réseau et le convertisseur de source de tension et la mise en correspondance comprend un réglage dudit courant de convertisseur pour qu'il soit égal à un courant de stator ($i_s$) du modèle de machine synchrone et l'étape de commande comprend l'application (66) d'une équation différentielle qui établit la relation entre le courant de stator ($i_s$) et un courant de magnétisation ($i_M$) traversant une inductance de magnétisation ($L_M$) du modèle de machine synchrone sur le courant de convertisseur (i).

4. Procédé selon la revendication 3, dans lequel l'étape de commande comprend le fait de commander le convertisseur de source de tension en utilisant un signal de commande ($v_{REF,TR}$) obtenu par la combinaison (68) d'un premier terme dépendant du courant de convertisseur (i), d'un deuxième terme dépendant du courant de magnétisation ($i_M$) et d'un troisième terme ($e_M$) représentant une force contre-électromotrice variable du modèle de machine synchrone.

5. Procédé selon la revendication 4, dans lequel l'étape de commande comprend le fait de combiner (68) les premier, deuxième et troisième termes pour obtenir une valeur de référence de courant de convertisseur ($i_{REF}$), où le signal de commande utilisé dépend (72) de la différence entre la valeur de référence de courant de convertisseur et le courant de convertisseur.

6. Procédé selon la revendication 5, dans lequel une propriété électrique détectée de l'interface entre le réseau et le convertisseur de source de tension est la tension du réseau (E) et l'étape de combinaison (68) implique aussi la combinaison d'un terme de réaction positive ($E_F$) de la tension de réseau pour obtenir la valeur de référence de courant de convertisseur et le signal de commande dépend aussi du terme de réaction positive ($E_F$) de la tension de réseau.

7. Procédé selon la revendication 5 ou 6, dans lequel l'étape de commande comprend le fait de limiter (70) la valeur de référence de courant de convertisseur.

8. Procédé selon l'une quelconque des revendications 4 à 7, dans lequel une propriété électrique détectée de l'interface entre le réseau et le convertisseur de source de tension est la tension de réseau (E) et l'étape de commande comprend la détermination (64) du troisième terme représentant la force contre-électromotrice basée sur la différence (62) entre une référence de tension de réseau ($E_{REF}$) et la tension de réseau absolue (|E|).

9. Procédé selon l'une quelconque des revendications précédentes, dans lequel ledit terme qui agit en tant que régulateur proportionnel pour la puissance électrique active est un terme qui dépend d'une inertie totale réglable de la dynamique mécanique et l'application d'une émulation de la dynamique mécanique de masse comprend l'application (82, 84) du terme ayant subi le filtrage passe-bas pour ajuster le signal de commande.

10. Procédé selon la revendication 9, comprenant en outre l'étape consistant à déterminer (36) la puissance active électrique ($P_E$) du convertisseur de source de tension, et l'application d'une émulation de la dynamique mécanique de masse implique la fourniture (76) d'un terme qui est proportionnel à une différence entre une puissance active de référence ($P_{REF}$) et la puissance active électrique ($P_E$) destinée à être utilisée dans l'expression de dynamique de masse.

11. Procédé selon la revendication 9 ou 10, comprenant en outre l'étape consistant à intégrer (82) l'expression dynamique de masse ayant subi le filtrage passe-bas afin d'obtenir un angle ($\theta_1$) avec lequel le signal de commande doit être ajusté.

**12.** Dispositif (25 ; 26) permettant de commander un convertisseur de source de tension (16 ; 20) connecté à un réseau électrique (12 ; 24) et comprenant :

- une première entrée pour recevoir au moins une propriété électrique détectée (E, i) d'une interface entre le réseau et le convertisseur de source de tension, et
- une entité de commande (27 ; 28) adaptée pour commander le convertisseur de source de tension (16 ; 20) par l'intermédiaire d'un signal de commande ($V_{REF,TR}$) obtenu par l'intermédiaire d'une mise en correspondance d'un modèle électrique d'une machine synchrone non saillante avec un modèle électrique du convertisseur de source de tension, et par application de la propriété électrique détectée de l'interface entre le réseau et le convertisseur de source de tension dans ledit modèle mis en correspondance, où le modèle électrique de la machine synchrone non saillante reflète la dynamique électrique de cette machine synchrone,
- dans lequel l'entité de commande, quand elle est agencée pour commander le convertisseur de source de tension, est en outre agencée pour appliquer une émulation de la dynamique mécanique de masse de la machine synchrone non saillante pour régler le signal de commande, dans lequel l'application d'une émulation de la dynamique mécanique de masse comprend le filtrage passe-bas d'une expression de dynamique de masse, laquelle expression de dynamique de masse comprend une fréquence de ligne de référence plus un terme qui agit en tant que régulateur proportionnel pour la puissance électrique active afin d'obtenir une fréquence de ligne angulaire des convertisseurs de source de tension.

**13.** Dispositif selon la revendication 12, dans lequel la mise en correspondance comprend un réglage d'une inductance de filtre (L) qui fait face au réseau dans le modèle électrique du convertisseur de source de tension pour qu'elle soit égale à une inductance de fuite totale ($L_\sigma$) du modèle de machine synchrone.

**14.** Dispositif selon la revendication 12 ou 13, dans lequel au moins une propriété électrique détectée de l'interface entre le réseau et le convertisseur de source de tension est un courant de convertisseur (i) circulant entre le réseau et le convertisseur de source de tension et la mise en correspondance comprend un réglage du courant de convertisseur (i) pour qu'il soit égal à un courant de stator ($i_s$) du modèle de machine synchrone et l'entité de commande (28) est en outre adaptée, quand elle commande le convertisseur de source de tension, pour appliquer une équation différentielle qui établit la relation entre le courant de stator ($i_s$) et un courant de magnétisation ($i_M$) traversant une inductance de magnétisation ($L_M$) du modèle de machine synchrone sur le courant de convertisseur (i).

**15.** Dispositif selon la revendication 14, dans lequel l'entité de commande, quand elle est adaptée pour commander le convertisseur de source de tension, est adaptée pour commander le convertisseur de source de tension en utilisant un signal de commande ($v_{REF,TR}$) obtenu par la combinaison d'un premier terme dépendant du courant de convertisseur (i), d'un deuxième terme dépendant du courant de magnétisation ($i_M$) et d'un troisième terme ($e_M$) représentant une force contre-électromotrice variable du modèle de machine synchrone.

**16.** Dispositif selon la revendication 15, dans lequel l'entité de commande (28) comprend une unité de dynamique électrique (44) adaptée pour combiner les premier, deuxième et troisième termes pour obtenir une valeur de référence de courant de convertisseur ($i_{REF}$) ainsi qu'une unité de commande de courant (48) adaptée pour fournir le signal de commande en se basant sur la différence entre la valeur de référence de courant de convertisseur et le courant de convertisseur.

**17.** Dispositif selon la revendication 16, dans lequel une propriété électrique détectée de l'interface entre le réseau et le convertisseur de source de tension est la tension du réseau (**E**) et l'unité de dynamique électrique (44), quand elle est adaptée pour réaliser la combinaison, est adaptée pour combiner aussi un terme de réaction positive ($E_F$) de la tension de réseau pour obtenir la valeur de référence de courant de convertisseur et l'unité de commande de courant (48) est adaptée pour fournir le signal de commande dépendant aussi du terme de réaction positive ($E_F$) de la tension de réseau.

**18.** Dispositif selon la revendication 16 ou 17, comprenant en outre une unité limitant le courant (46) adaptée pour limiter la valeur de référence de courant de convertisseur.

**19.** Dispositif selon l'une quelconque des revendications 15 à 18, dans lequel une propriété électrique détectée de l'interface entre le réseau et le convertisseur de source de tension est la tension du réseau (**E**) et comprenant en outre une unité excitatrice (42) adaptée pour déterminer le troisième terme ($e_M$) représentant la force contre-électromotrice basée sur la différence entre une référence de tension de réseau ($\mathbf{E}_{REF}$) et la tension de réseau absolue ($|\mathbf{E}|$).

20. Dispositif selon l'une quelconque des revendications 12 à 19, dans lequel ledit terme qui agit en tant que régulateur proportionnel pour la puissance électrique active est un terme qui dépend d'une inertie totale réglable de la dynamique mécanique et l'entité de commande est en outre adaptée pour appliquer le terme ayant subi le filtrage passe-bas pour ajuster le signal de commande, lors de l'application d'une émulation de la dynamique mécanique de masse.

21. Dispositif selon la revendication 20, dans lequel le dispositif de commande comprend en outre une unité de détermination de puissance (29 ; 30) adaptée pour déterminer la puissance active électrique ($P_E$) du convertisseur de source de tension, et l'entité de commande comprend une unité régulatrice (54) adaptée pour fournir un terme qui est proportionnel à une différence entre une puissance active de référence ($P_{REF}$) et la puissance active électrique ($P_E$) destinée à être utilisée par l'unité de filtrage passe-bas (58) dans l'expression de dynamique de masse.

22. Dispositif (10') selon la revendication 20 ou 21, dans lequel l'entité de commande comprend en outre une unité d'intégration (60) adaptée pour intégrer l'expression de dynamique de masse ayant subi le filtrage passe-bas afin d'obtenir un angle ($\theta_1$) avec lequel le signal de commande doit être ajusté.

23. Dispositif (10') selon la revendication 22, dans lequel l'entité de commande comprend en outre une unité de transformation (50) pour ajuster le signal de commande avec ledit angle.

24. Produit de programme d'ordinateur fourni sur un support de données pour commander un convertisseur de source de tension (16 ; 20) connecté à un réseau électrique (12 ; 24), et comprenant un code de programme d'ordinateur pour faire exécuter par un dispositif de commande (25 ; 26) le procédé de l'une quelconque des revendications 1 à 11, quand ledit code est chargé dans ledit dispositif de commande.

FIG. 1

DETECT GRID VOLTAGE E AND CURRENT i — 34

DETERMINE ELECTRICAL ACTIVE POWER $P_E$ — 36

DETERMINE CONTROL SIGNAL $V_{REF,TR}$ USING DETECTED PROPERTIES IN MAPPED ELECTRICAL MODELS AND EMULATION OF MASS MECHANICAL DYNAMICS — 38

CONTROL VOLTAGE SOURCE CONVERTER USING CONTROL SIGNAL $V_{REF,TR}$ — 39

FIG. 2

FIG. 3a

FIG. 3b

FIG. 4

SUBTRACT ABSOLUTE GRID VOLTAGE $|\mathbf{E}|$ FROM GRID VOLTAGE REFERENCE $\mathbf{E}_{REF}$ — 62

DETERMINE BACK emf $\mathbf{e}_M$ BASED ON AMPLIFYING ($K_E$) AND FILTERING ($1+sT_E$) DIFFERENCE — 64

DETERMINE RELATIONSHIP BETWEEN CONVERTER CURRENT $\mathbf{i}$ AND MAGNETIZATION CURRENT $\mathbf{i}_M$ THROUGH APPLYING DIFFERENTIAL EQUATION — 66

COMBINE FIRST, SECOND, THIRD AND FOURTH TERMS $(\alpha_c L - R_R)\mathbf{i}$, $(R_R - j\omega_1 L_M)\mathbf{i}_M$, $\mathbf{e}_M$ AND $\mathbf{E}_F$ FOR OBTAINING CONVERTER CURRENT REFERENCE VALUE $\mathbf{i}_{REF}$ — 68

LIMIT $\mathbf{i}_{REF}$ — 70

APPLY CURRENT CONTROL LAW ON $(\mathbf{i}_{REF,LIM} - \mathbf{i})$ FOR OBTAINING CONTROL SIGNAL $\mathbf{v}_{REF}$ — 72

FIG. 5

SUBTRACT ELECTRICAL ACTIVE POWER $P_E$
FROM REFERENCE ACTIVE POWER $P_{REF}$ — 74

ATTENUATE $(K_G)$ DIFFERENCE — 76

ADD REFERENCE LINE FREQUENCY $\omega_{REF}$ — 78

LOW PASS FILTER $(1+sJ'/K_G)$ FOR
OBTAINING INSTANTANEOUS ANGULAR
LINE FREQUENCY $\omega_1$ — 80

INTEGRATE FOR OBTAINING ANGLE $\theta_1$ — 82

ADJUST CONTROL SIGNAL $v_{REF}$ WITH
ANGLE $\theta_1$ — 84

FIG. 6

**EP 2 319 170 B1**

**Patent documents cited in the description**

- WO 2008000626 A
- US 20060268587 A
- DE 102006047792